# EUROPEAN PATENT SPECIFICATION

(11) **EP 4 360 458 B1**
(45) Date of publication and mention of the grant of the patent: **25.02.2026**
(21) Application number: 22210342.6
(22) Date of filing: 29.11.2022
(51) Int. Cl.: A21B 3/07, A21B 1/44

(54) **PLATFORM FOR A TROLLEY AND ROTARY OVEN COMPRISING SUCH A PLATFORM**
PLATTFORM FÜR EINEN WAGEN UND DREHOFEN MIT EINER SOLCHEN PLATTFORM
PLATE-FORME POUR CHARIOT ET FOUR ROTATIF COMPORTANT UNE TELLE PLATE-FORME

(30) Priority: 24.10.2022 IT 202200021897
(43) Date of publication of application: 01.05.2024
(73) Proprietor: Mondial Forni S.p.A., 37139 Verona (IT)
(72) Inventor: RONCARI, Alessio, 37060 Mozzecane (IT); TRIVELLIN, Leonardo, 37066 Caselle di Sommacampagna (IT)
(74) Representative: Dondi, Silvia

(56) References cited:
- EP-A1- 0 413 901
- CN-U- 207 158 384
- CN-U- 208 972 409
- FR-A1- 2 868 058

## Description

The present invention relates to a platform for a trolley and a rotary oven comprising such a platform.

The present invention is applied in particular to baking bread, pastry and similar products by means of hot air.

As is known, baking bread, pastry and similar products by means of hot air occurs using two technologies: convection ovens and rotary trolley ovens. In convection ovens (otherwise known as fixed tray ovens), the product is baked on baking trays by circulating hot air by means of fans, often with the presence of a system which generates the inversion of the rotation direction of the impeller, to improve the baking uniformity. The air is heated through electrical resistors or through a heat exchanger fed by a burner (typically "custom" burners).

Fixed baking ovens have been greatly developed in the world of gastronomy, but have had a limited impact in the world of baking bread, pastry and similar products. This is due to the fact that such products require as uniform baking as possible, which the fixed tray ovens cannot ensure.

In rotary trolley ovens, the product is placed on baking trays which are in turn inserted in a trolley, usually in stainless steel, provided with wheels. The trolley is then placed in the oven and mounted on a rotation system which rotates it on itself by means of a motor for the entire duration of the baking.

The oven bakes the product with hot air, where the air is circulated by means of fans and the air is heated through electrical resistors or through a heat exchanger fed by a burner (typically blown air burners).

Rotary trolley ovens are used almost exclusively for baking bread, pastry and similar products since the rotation of the trolley offers a clear improvement in baking uniformity relative to the fixed tray convection ovens.

Currently, two alternative solutions are used for the rotation of the trolley.

The first solution includes a lifting hook inside the oven. It is a metal hook connected to the rotation motor. The hook has an inclined surface. When the trolley is pushed into the oven, it "rises" along the surface of the hook and detaches from the ground until it reaches a small hollow which prevents the trolley from sliding backwards. Once the trolley is in position, the hook begins to turn and the trolley therewith.

The second solution includes a rotating platform placed inside the oven and connected to the rotation motor. The trolley is placed above the platform base, which is then rotated.

In the context of rotary ovens with rotating platform, the main drawback is related to the size and shape of the platform itself. The solutions currently on the market do not allow an adequate cleaning of the oven in the normal bread production cycles. In particular, residues remain below the platform base, which has the shape of a flat disc. Such a flat disc covers the bottom of the oven baking chamber, making the cleaning thereof difficult. Another drawback is related to the difficulty of adapting the platform to the multitude of trolleys available on the market. Each manufacturer uses different coupling systems, and over time several hybrid solutions have been created. In fact, in a market strongly oriented to replacement, the sale of new ovens is linked to the compatibility thereof with the trolleys already in the customers' possession.

Document EP0413901 A1 envisages that, for rapid and better cleaning of the baking space floor of an oven equipped with a rotary device for a multilevel carriage, the floor of the bakers' oven is turned up around the opening for the shaft, the cylindrical collar thus formed being surrounded by a hood which supports the rotary mounting and is arranged at the upper end of the drive shaft.

Document FR2868058 A1 discloses at least one wheel guide for the trolley in which the wheels can be moved from a first end of the guide to a second end of the guide or vice versa. The guide is connected to a height adjustment mechanism used to alter the height of the first and/or second end of the guide relative to the floor.

Document CN208972409 U discloses a heating device for baked food comprising a box body, the inner bottom end of which is fixedly connected with two slide rails.

Document CN207158384 U discloses a refrigerator -freezer loading and unloading guide rail, comprising a rail body, a track body, a rail, an upper guide block, a lower guide block, and an adjustment sleeve, an adjustment rod and a fixing screw.

In this context, the technical task underlying the present invention is to propose a platform for a trolley and a rotary oven comprising such a platform which overcome the drawbacks of the cited prior art.

In particular, it is an object of the present invention to propose a platform for a trolley and a rotary oven comprising such a platform, which allow a better cleaning relative to the known solutions.

Another object of the present invention is to provide a platform for a trolley, which is universal, i.e., easily employable for different trolley models.

The technical aims listed above are substantially achieved by a platform for a trolley with wheels, in particular insertable in an oven, said platform comprising a base for the trolley and a body mounted on the base, said body comprising a coupling portion for the trolley. The base comprises at least a first arm and a second arm respectively defining a first track and a second track for accommodating the wheels of the trolley. The base comprises at least one cross member connecting between the first arm and the second arm.

According to the invention, the first arm and the second arm respectively extend prevalently along a first direction and a second direction that are parallel to each other.

According to the invention, the first track and the second track are parallel to each other.

In accordance with an embodiment, the cross member extends prevalently along a third direction which is orthogonal to the first direction and to the second direction.

In accordance with an embodiment, the cross member extends between a central portion of the first arm and a central portion of the second arm.

In accordance with an embodiment, the cross member comprises a rest surface. In accordance with an embodiment, the first arm and the second arm are mounted on the cross member at a greater height than the rest surface of the cross member.

According to the invention, the platform further comprises a first guide and a second guide mounted on the base so as to guide the wheels of the trolley, respectively on the first arm and on the second arm.

In accordance with an embodiment, the first guide and the second guide respectively extend in an elongated manner along the first arm and the second arm.

According to the invention, the first guide is slidably mounted on the first arm so as to be able to translate transversely relative to the first direction and the second guide is slidably mounted on the second arm so as to be able to translate transversely relative to the second direction.

In accordance with an embodiment, the platform comprises a coupling means between the first guide and the second guide.

Preferably, the coupling means comprises a telescopic device having a first end to which the first guide is fixed and a second end to which the second guide is fixed.

In accordance with an embodiment, the platform comprises an elastic means interposed between the first and the second arm.

The technical aims listed above are substantially achieved by a rotary oven, comprising:
- a box-like casing internally defining a baking chamber;
- a platform according to what has been described, said platform being positioned inside the baking chamber;
- a driving means configured to rotate said platform around a predefined rotation axis.

Further features and advantages of the present invention will become more apparent from the indicative and thus non-limiting description of a preferred, but not exclusive, embodiment of a platform for a trolley and a rotary oven comprising such a platform, as illustrated in the appended drawings, in which:

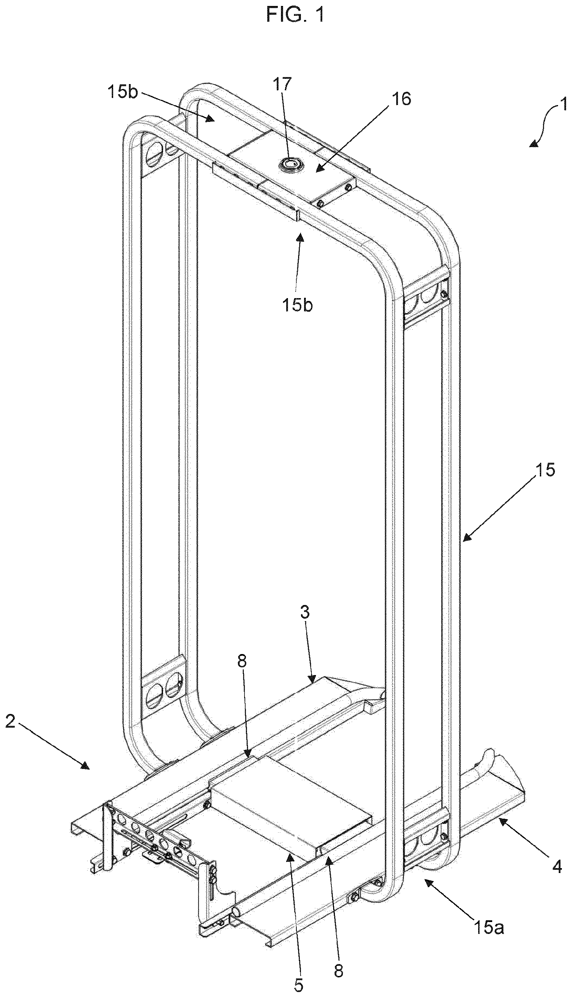

- figure 1 illustrates a platform for a trolley, object of the present invention, in perspective view from behind;

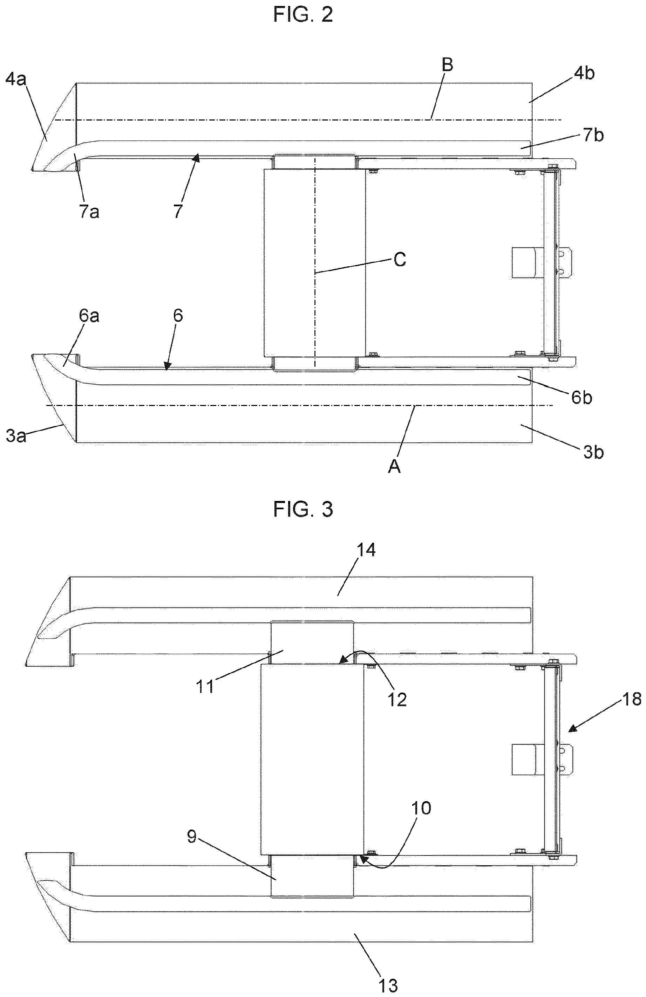

- figures 2 and 3 illustrate a top view of a detail (base) of the platform of figure 1, in which the guides are respectively positioned in two different configurations;

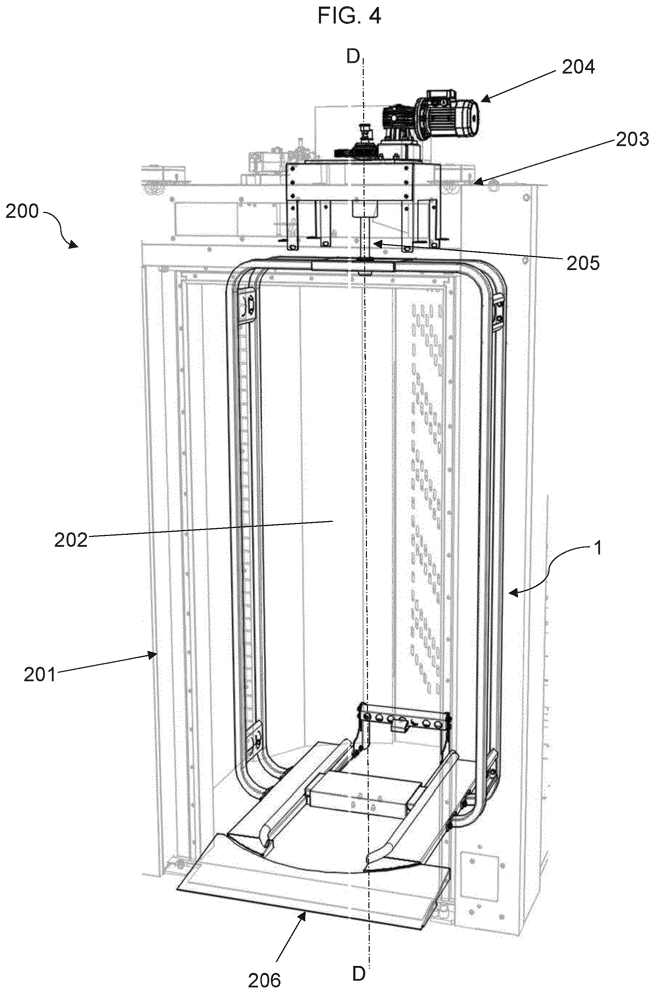

- figure 4 illustrates a rotary oven, subject-matter of the present invention, in perspective view;

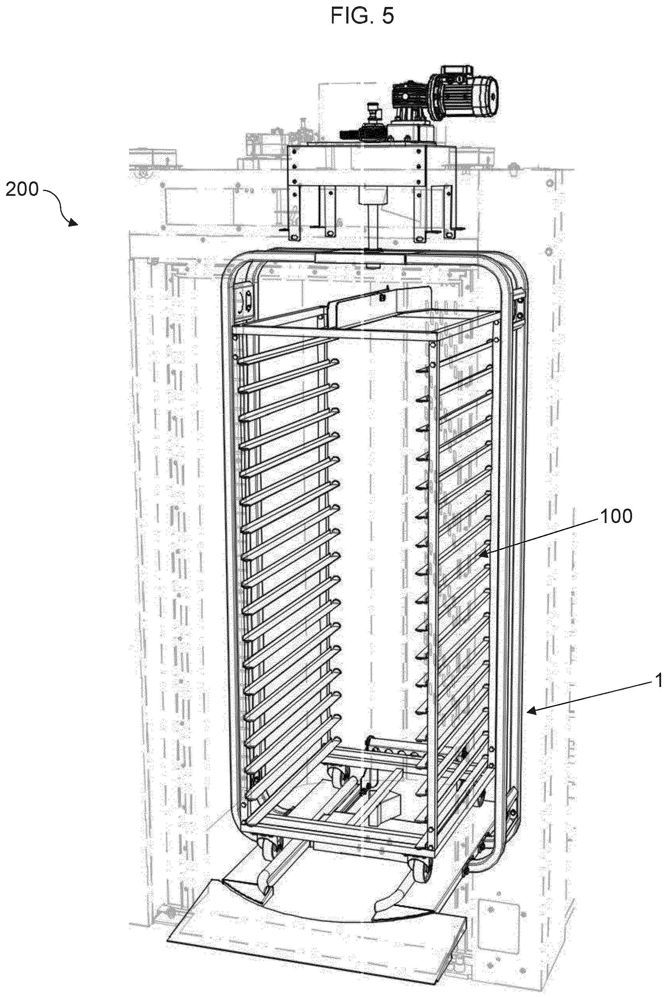

- figure 5 illustrates the rotary oven of figure 4, in which a trolley has been inserted.

With reference to the figures, reference numeral 1 indicates a platform for a trolley 100 provided with wheels.

The platform 1 comprises a base 2 for the trolley 100 and a body 15 mounted on the base 2.

Originally, the base 2 comprises at least a first arm 3, a second arm 4 and a cross member 5 connecting between the first arm 3 and the second arm 4.

The first arm 3 defines a first track and the second arm 4 defines a second track for accommodating the wheels of the trolley 100.

In accordance with the embodiment described and shown herein, the first arm 3 has an elongated extension along a first direction A, while the second arm 4 has an elongated extension along a second direction B. In the embodiment illustrated in the figures, the first direction A and the second direction B are substantially parallel.

The first track and the second track are likewise parallel to each other.

Preferably, the first arm 3 extends along the first direction A between a first end 3a and a second end 3b.

Preferably, the second arm 4 extends along the second direction B between a first end 4a and a second end 4b.

Preferably, the cross member 5 extends in an elongated manner along a third direction C which is orthogonal to the first direction A and to the second direction B.

Preferably, the cross member 5 extends between a central portion of the first arm 3 and a central portion of the second arm 4.

In particular, the cross member 5 is arranged substantially halfway between the first arm 3 and the second arm 4. In such a case, the base 2 substantially has an "H" shape. In particular, the two arms 3, 4 constitute the long sides of the "H", while the cross member 5 constitutes the short side of the "H".

In accordance with an alternative embodiment, not illustrated, the cross member 5 is inclined relative to the two arms 3, 4 forming an angle different from 90°. For example, the cross member 5 is arranged diagonally relative to the two arms 3,4.

The cross member 5 has a rest surface (not visible in the figures), intended to be rested on the bottom of a baking chamber 202 of an oven 200.

Preferably, the first arm 3 and the second arm 4 are mounted on the cross member 5 at a greater height than the rest surface of the cross member 5. Thereby, the first arm 3 and the second arm 4 do not rest on the bottom of the baking chamber 202 of the oven 200, but are raised relative thereto. Preferably, the cross member 5 is the only part of the platform 2 which rests on the bottom of the baking chamber 202 of the oven 200. Preferably, the cross member 5 comprises one or more bearings (not illustrated).

Preferably, the cross member 5 comprises a greasing system (not illustrated). In an embodiment, the greasing system is of the automatic type. In an alternative embodiment, the greasing system is of the manual type.

The platform 1 comprises a first guide 6 and a second guide 7 mounted on the base 2 so as to be positioned respectively at the first arm 3 and the second arm 4.

Preferably, the first guide 6 extends elongated along the first arm 3. Preferably, the first guide 6 extends elongated along at least partially according to a direction substantially parallel to the first direction A. Preferably, the second guide 7 extends elongated along the second arm 4. Preferably, the second guide 7 extends elongated at least partially according to a direction substantially parallel to the second direction B.

In accordance with the invention, the first guide 6 is slidably mounted on the first arm 3 so as to be able to translate transversely relative to the first direction A and the second guide 7 is slidably mounted on the second arm 4 so as to be able to translate transversely relative to the second direction B.

Preferably, the first guide 6 is slidably mounted on the first arm 3 so as to be able to translate orthogonally relative to the first direction A and the second guide 7 is slidably mounted on the second arm 4 so as to be able to translate orthogonally relative to the second direction B.

The first guide 6 and the second guide 7 are preferably coupled, i.e., joined, by a coupling means 8.

In accordance with an embodiment described and illustrated herein, the coupling means 8 comprises a telescopic device (always indicated with 8) having a first end 9 to which the first guide 6 is fixed and a second end 11 to which the second guide 7 is fixed.

In the preferred embodiment, the first guide 6 and the second guide 7 are fixed to the cross member 5.

Preferably, the telescopic device 8 comprises two perforated end portions 10, 12 of the cross member 5: a first perforated end portion 10 and a second perforated end portion 12, which are located on opposite sides of the cross member 5.

The first end 9 and the second end 11 of the telescopic device 8 are slidably mounted relative to the perforated end portions 10, 12 of the cross member 5.

The first end 9 is slidably mounted within a first perforated end portion 10 so as to elongate telescopically in a direction transverse to the first arm 3 and move the first guide 6.

The second end 11 is slidably mounted within a second perforated end portion 12 so as to elongate telescopically in a direction transverse to the second arm 4 and move the second guide 7.

Preferably, the first guide 6 is movable (i.e., sliding) between a first position and a second position relative to the first arm 3. In at least one intermediate position between the first and the second position, the first guide 6 is located above and facing relative to the first arm 3.

Preferably, the second guide 7 is movable (i.e., sliding) between a first position and a second position relative to the second arm 4. In at least one intermediate position between the first and the second position, the second guide 7 is located above and facing relative to the second arm 4. The mobility of the two guides 6, 7 allows the position thereof to be adjusted as a function of the width of the trolley. Thereby, different trolleys can be accommodated by the same platform.

In particular, the first arm 3 comprises a first support surface 13 intended to support a pair of wheels of the trolley. The second arm 4 comprises a second support surface 14 intended to support the other pair of wheels of the trolley.

The first support surface 13 has a substantially planar extension defined by a length (i.e., dimension along the first direction A) and by a width (i.e., dimension along a direction orthogonal to the first direction A).

In practice, the first track is defined and comprised in the first support surface 13.

The second support surface 14 has a substantially planar extension defined by a length (i.e., dimension along the second direction B) and a width (i.e., dimension along a direction orthogonal to the second direction B).

In practice, the second track is defined and comprised in the second support surface 14.

The sliding direction of the first end 9 of the telescopic device 8 is substantially parallel to the width of the first support surface 13.

The sliding direction of the second end 11 of the telescopic device 8 is substantially parallel to the width of the second support surface 14.

That is, the position of the two guides 6, 7 is adjustable relative to the width of the respective arm 3, 4.

In the preferred embodiment, the first end 3a of the first arm 3 and the first end 4a of the second arm 4 are curved towards the inside of the base 2. That is, such first ends 3a, 4a are converging.

Similarly, the first guide 6 comprises a first curved section 6a arranged at the first end 3a of the first arm 3 and a first straight section 6b.

The second guide 7 comprises a second curved section 7a arranged at the first end 4a of the second arm 4 and a second straight section 7b.

The body 15 comprises at least one upright (illustrated with the same number 15) extending away from the base 2 between a first end 15a and a second end 15b. The first end 15a of the upright 15 originates laterally from the base 2. The second end 15b is raised relative to the base 2 and thus at the first end 15a.

Preferably, the upright 15 comprises a coupling portion 16 intended to couple with a driving means 203 of a rotary oven 200. Preferably, the coupling portion 16 comprises a through opening 17 for coupling with such a driving means 203.

In the preferred embodiment, there are two uprights 15 which originate from two opposite sides of the base 2. Preferably, the first ends 15a of the two uprights 15 originate from the outer sides of the first and the second arm 3, 4, respectively.

Preferably, the second ends 15b of the two uprights 15 are approached above the base 2. Preferably, the second ends 15b are joined together. That is, the two uprights 15 have arched extension above the base 2. In this case, the coupling portion 16 is shared between the two uprights 15 and acts as a joining section between the two second ends 15b.

Preferably, the platform 1 comprises an elastic means 18 interposed between the first and the second arm 3, 4.

Preferably, the elastic means 18 is connected to the second ends 3b, 4b of the first and the second arm 3, 4.

Preferably, the elastic means 18 comprises at least one spring in harmonic material.

In an alternative embodiment, the base 2 comprises two arms 3, 4 and a plurality of cross members 5. For example, the cross members 5 are parallel to each other and are arranged orthogonally to the arms 3, 4.

In a variant, there are two cross members 5 arranged to form an "X" connecting the arms 3, 4.

In an alternative embodiment, the base 2 comprises two arms 3, 4 and two cross members 5 constituting sides of a rectangle or a square, i.e., the base 2 has a closed shape.

A rotary oven, indicated with the number 200 and described below, is further an object of the present invention.

The rotary oven 200 comprises a box-like casing 201 internally defining a baking chamber 202.

The rotary oven 200 comprises a driving means 203 operatively active on the platform 1 to rotate it around a predefined rotation axis D-D, preferably vertical.

In particular, the driving means 203 is coupled with the coupling portion 16 of the upright 15.

Preferably, the driving means 203 comprises a pin 205 and a motorised means 204 operatively connected to the pin 205 to rotate it around a longitudinal axis thereof.

The coupling portion 16 is coupled with the pin 205 by means of the through opening 17. The upright 15 receives the rotation from the pin 205 and transmits it to the base 2. The rotation of the base 2 involves the rotation of the trolley 100 which lies above it.

The rotary oven 200 comprises a heating means (not illustrated) of a baking fluid.

The rotary oven 200 comprises a means for recirculating (not shown) the baking fluid from the baking chamber 202 to the heating means, and vice versa.

Preferably, the baking fluid is air.

Preferably, the rotary oven 200 comprises a ramp 206 placed in front of the base 2 of the platform 1 to facilitate the positioning of the trolley on the base 2.

The features of the platform for a trolley and the rotary oven comprising such a platform emerge clearly from the above description, as do the advantages.

In particular, the shape proposed for the base of the platform (two arms joined transversely by the cross member) allows to significantly reduce the overall dimensions of the platform in the baking chamber, allowing an easier and more reliable cleaning of the bottom of the chamber.

Relative to a traditional platform, the platform proposed here allows to have a base with a footprint smaller by 60÷70%, depending on the size of the oven.

Furthermore, the presence of adjustable guides allows to use the same platform for different types of trolleys. In fact, the guides which are adjustable according to the width of the arms allow extreme versatility, avoiding guide format changes.

## Claims

1. A platform (1) for a trolley (100) with wheels, in particular insertable in an oven (200), said platform (1) comprising a base (2) for the trolley (100) and a body (15) mounted on the base (2), said body (15) comprising a coupling portion (16) for the trolley (100),
wherein said base (2) comprises:
- at least a first arm (3) and a second arm (4) respectively defining a first track and a second track for accommodating the wheels of the trolley (100);
- at least one cross member (5) connecting between the first arm (3) and the second arm (4), wherein the first arm (3) and the second arm (4) respectively extend prevalently along a first direction (A) and a second direction (B) that are parallel to each other, said first track and said second track likewise being parallel to each other,
said platform (1) further comprising a first guide (6) and a second guide (7) mounted on the base (2) so as to guide the wheels of the trolley (100) respectively on the first arm (3) and the second arm (4),
**characterized in that** the first guide (6) is slidably mounted on the first arm (3) so as to be able to translate transversely relative to the first direction (A) and the second guide (7) is slidably mounted on the second arm (4) so as to be able to translate transversely relative to the second direction (B).

2. The platform (1) according to claim 1, wherein the cross member (5) extends prevalently along a third direction (C) which is orthogonal to the first direction (A) and to the second direction (B).

3. The platform (1) according to any one of the preceding claims, wherein the cross member (5) extends between a central portion of the first arm (3) and a central portion of the second arm (4).

4. The platform (1) according to any one of the preceding claims, wherein said cross member (5) comprises a rest surface, the first arm (3) and the second arm (4) being mounted on the cross member (5) at a greater height than the rest surface of the cross member (5).

5. The platform (1) according to claim 1, wherein the first guide (6) and the second guide (7) respectively extend in an elongated manner along the first arm (3) and the second arm (4).

6. The platform (1) according to claim 1, comprising a coupling means (8) between the first guide (6) and the second guide (7).

7. The platform (1) according to claim 6, wherein the coupling means (8) comprises a telescopic device having a first end (9) to which the first guide (6) is fixed and a second end (11) to which the second guide (7) is fixed.

8. The platform (1) according to any one of the preceding claims, comprising an elastic means (18) interposed between the first and the second arm (3, 4).

9. A rotary oven (200) comprising:
- a box-like casing (201) internally defining a baking chamber (202);
- a platform (1) according to any one of the preceding claims, said platform (1) being positioned inside the baking chamber (202);
- a driving means (203) configured to rotate said platform (1) around a predefined rotation axis (D-D).

## Patentansprüche

1. Plattform (1) für einen Wagen (100) mit Rädern, die insbesondere in einen Ofen (200) einfügbar ist, wobei die Plattform (1) eine Basis (2) für den Wagen (100) und einen Körper (15) umfasst, der auf der Basis (2) montiert ist, wobei der Körper (15) einen Kupplungsabschnitt (16) für den Wagen (100) umfasst,
wobei die Basis (2) Folgendes umfasst:
- mindestens einen ersten Arm (3) und einen zweiten Arm (4), die jeweils eine erste Schiene und eine zweite Schiene zum Unterbringen der Räder des Wagens (100) definieren;
- mindestens ein Kreuzelement (5), das zwischen dem ersten Arm (3) und dem zweiten Arm (4) verbunden ist, wobei sich der erste Arm (3) und der zweite Arm (4) jeweils vorwiegend entlang einer ersten Richtung (A) und einer zweiten Richtung (B) erstrecken, die parallel zueinander verlaufen, wobei die erste Schiene und die zweite Schiene ebenso parallel zueinander verlaufen, wobei die Plattform (1) ferner eine erste Führung (6) und eine zweite Führung (7) umfasst, die auf der Basis (2) montiert sind, sodass die Räder des Wagens (100) jeweils auf dem ersten Arm (3) und dem zweiten Arm (4) geführt werden,
**dadurch gekennzeichnet, dass** die erste Führung (6) verschiebbar auf dem ersten Arm (3) montiert ist, sodass sie fähig ist, quer relativ zur ersten Richtung (A) zu verfahren, und dass die zweite Führung (7) verschiebbar auf dem zweiten Arm (4) montiert ist, sodass sie fähig ist, quer relativ zur zweiten Richtung (B) zu verfahren.

2. Plattform (1) nach Anspruch 1, wobei sich das Kreuzelement (5) vorwiegend entlang einer dritten Richtung (C) erstreckt, die rechtwinkelig zur ersten Richtung (A) und zur zweiten Richtung (B) verläuft.

3. Plattform (1) nach einem der vorhergehenden Ansprüche, wobei sich das Kreuzelement (5) zwischen einem mittigen Abschnitt des ersten Arms (3) und einem mittigen Abschnitt des zweiten Arms (4) erstreckt.

4. Plattform (1) nach einem der vorhergehenden Ansprüche, wobei das Kreuzelement (5) eine Auflageoberfläche umfasst und der erste Arm (3) und der zweite Arm (4) auf dem Kreuzelement (5) in einer höheren Höhe als die Auflageoberfläche des Kreuzelements (5) montiert sind.

5. Plattform (1) nach Anspruch 1, wobei sich die erste Führung (6) und die zweite Führung (7) jeweils in einer langgestreckten Weise entlang des ersten Arms (3) und des zweiten Arms (4) erstrecken.

6. Plattform (1) nach Anspruch 1, umfassend Kupplungsmittel (8) zwischen der ersten Führung (6) und der zweiten Führung (7).

7. Plattform (1) nach Anspruch 6, wobei die Kupplungsmittel (8) eine Teleskopvorrichtung umfassen, die ein erstes Ende (9), an dem die erste Führung (6) befestigt ist, und ein zweites Ende (11) aufweist, an dem die zweite Führung (7) befestigt ist.

8. Plattform (1) nach einem der vorhergehenden Ansprüche, umfassend elastische Mittel (18), die zwischen dem ersten und dem zweiten Arm (3, 4) eingesetzt sind.

9. Drehofen (200), umfassend:
- ein kastenähnliches Gehäuse (201), das innenseitig einen Backraum (202) definiert;
- eine Plattform (1) nach einem der vorhergehenden Ansprüche, wobei die Plattform (1) innerhalb des Backraums (202) positioniert ist;
- Antriebsmittel (203), die ausgelegt sind, um die Plattform (1) rund um eine Rotationsachse (D-D) zu drehen.

## Revendications

1. Plate-forme (1) pour chariot (100) à roues, en particulier insérable dans un four (200), ladite plate-forme (1) comprenant une base (2) pour le chariot (100) et un corps (15) monté sur la base (2), ledit corps (15) comprenant une portion de couplage (16) pour le chariot (100),
dans laquelle ladite base (2) comprend :
- au moins un premier bras (3) et un second bras (4) définissant respectivement une première voie et une seconde voie pour recevoir les roues du chariot (100) ;
- au moins un élément transversal (5) reliant le premier bras (3) et le second bras (4), dans lequel le premier bras (3) et le second bras (4) s'étendent de manière prédominante respectivement le long d'une première direction (A) et d'une deuxième direction (B) qui sont parallèles l'une à l'autre, ladite première voie et ladite seconde voie étant également parallèles l'une à l'autre,
ladite plate-forme (1) comprenant en outre un premier guide (6) et un second guide (7) montés sur la base (2) de manière à guider les roues du chariot (100) respectivement sur le premier bras (3) et le second bras (4),
**caractérisée en ce que** le premier guide (6) est monté de manière coulissante sur le premier bras (3) de manière à pouvoir se déplacer transversalement par rapport à la première direction (A) et le second guide (7) est monté de manière coulissante sur le second bras (4) de manière à pouvoir se déplacer transversalement par rapport à la deuxième direction (B).

2. Plate-forme (1) selon la revendication 1, dans laquelle l'élément transversal (5) s'étend de manière prédominante le long d'une troisième direction (C) qui est orthogonale à la première direction (A) et à la deuxième direction (B).

3. Plate-forme (1) selon l'une quelconque des revendications précédentes, dans laquelle l'élément transversal (5) s'étend entre une portion centrale du premier bras (3) et une portion centrale du second bras (4).

4. Plate-forme (1) selon l'une quelconque des revendications précédentes, dans laquelle ledit élément transversal (5) comprend une surface de repos, le premier bras (3) et le second bras (4) étant montés sur l'élément transversal (5) à une hauteur supérieure à la surface de repos de l'élément transversal (5).

5. Plate-forme (1) selon la revendication 1, dans laquelle le premier guide (6) et le second guide (7) s'étendent respectivement de manière allongée le long du premier bras (3) et du second bras (4).

6. Plate-forme (1) selon la revendication 1, comprenant des moyens de couplage (8) entre le premier guide (6) et le second guide (7).

7. Plate-forme (1) selon la revendication 6, dans laquelle les moyens d'accouplement (8) comprennent un dispositif télescopique ayant une première extrémité (9) à laquelle le premier guide (6) est fixé et une seconde extrémité (11) à laquelle le second guide (7) est fixé.

8. Plate-forme (1) selon l'une quelconque des revendications précédentes, comprenant des moyens élastiques (18) interposés entre le premier et le second bras (3, 4).

9. Four rotatif (200), comprenant :
- un logement en forme de boîte (201) définissant intérieurement une chambre de cuisson (202) ;
- une plate-forme (1) selon l'une quelconque des revendications précédentes, ladite plate-forme (1) étant positionnée à l'intérieur de la chambre de cuisson (202) ;
- des moyens d'entraînement (203) configurés pour faire tourner ladite plate-forme (1) autour d'un axe de rotation prédéfini (D-D).
